(19) Europäisches Patentamt
European Patent Office
Office européen des brevets

(11) **EP 0 473 192 B2**

(12) NEW EUROPEAN PATENT SPECIFICATION

(45) Date of publication and mention
of the opposition decision:
**01.09.1999 Bulletin 1999/35**

(45) Mention of the grant of the patent:
**19.07.1995 Bulletin 1995/29**

(21) Application number: **91114659.5**

(22) Date of filing: **30.08.1991**

(51) Int Cl.⁶: **H02M 1/12**, H02M 7/48

(54) **A circuit for reducing resonance voltage**

Schaltkreis zum Unterdrücken von Resonanz-Spannung

Circuit pour la réduction de la tension résonante

(84) Designated Contracting States:
**DE GB**

(30) Priority: **30.08.1990 JP 22923990**

(43) Date of publication of application:
**04.03.1992 Bulletin 1992/10**

(73) Proprietor: **MITSUBISHI DENKI KABUSHIKI KAISHA**
**Tokyo 100 (JP)**

(72) Inventors:
• **Nishizawa, Yuji, c/o MITSUBISHI DENKI K.K.**
  **Nagoya-shi, Aichi (JP)**
• **Daijo, Masakatsu, c/o MITSUBISHI DENKI K.K.**
  **Nagoya-shi, Aichi (JP)**

(74) Representative: **Sajda, Wolf E., Dipl.-Phys. et al**
**MEISSNER, BOLTE & PARTNER**
**Widenmayerstrasse 48**
**80538 München (DE)**

(56) References cited:
**US-A- 3 568 021          US-A- 3 668 507**
**US-A- 4 646 222**

• **German Journal "etz" Volume 110 (1989),**
  **Volume 10, pages464-471**

**Description**

The invention relates to a circuit for reducing a resonance voltage generated by the inductance and capacitance of cable connecting the output of a voltage source and a load. In particular, the invention relates to a circuit for suppressing the ocurrence of resonance voltage in a long AC power cable.

The document US-A-3 568 021 discloses a variable input voltage inverter with reliable commutation which recharges each commutating capacitor through an impedance and a controllable semiconductor switch, preferably a resistor and a transistor in series with a commutating capacitor, to the value of a source of fixed or predetermined voltage to assure reliable commutation over the entire range of input voltage control. The conventional device comprises a DC supply with inverter means for supplying an AC signal to a load. The conventional circuit further includes feedback means comprising a feedback diode and a resistor connected across a series circuit comprising inverter means.

The problem addressed in US-A-3 568 021 relates to an inverter circuit and commutating circuit when the DC supply voltage is not fixed. When the commutating circuit is designed for a given DC voltage supply level, but the actual supply voltage deviates therefrom, there may be insufficient energy remaining for the commutation circuit. To overcome this problem, the document teaches a particular arrangement of the commutation (inverter) circuit, which includes capacitor recharging means connected in series with the switching means disclosed there in order to guarantee that the energy for commutation is always available.

The most relevant prior art, document US-A-4 646 222, refers to an overvoltage clamping circuit in connection with a voltage inverter, however, the US-A-4 646 222 does not mention the problematical nature of a long connection line between inverter and load. The basic thought of the US-A-4 646 222 consists in forming a resonance circuit by means of reactors as well as associated capacitors. Both, the inductances of the reactors and the capacitances of the associated capacitors are to be selected so as to minimize the secondary oscillating voltage of the boosting transformer.

In a cable, a resonance voltage is generated by an inductance $L_0$ and a capacitance $C_0$ of the cable connecting the output of a voltage source inverter (hereinafter referred to as the "inverter unit") and a motor as a load. The output voltage of the inverter unit changes in a stepwise fashion, generating a voltage oscillation having twice the amplitude of the output voltage in the worst case.

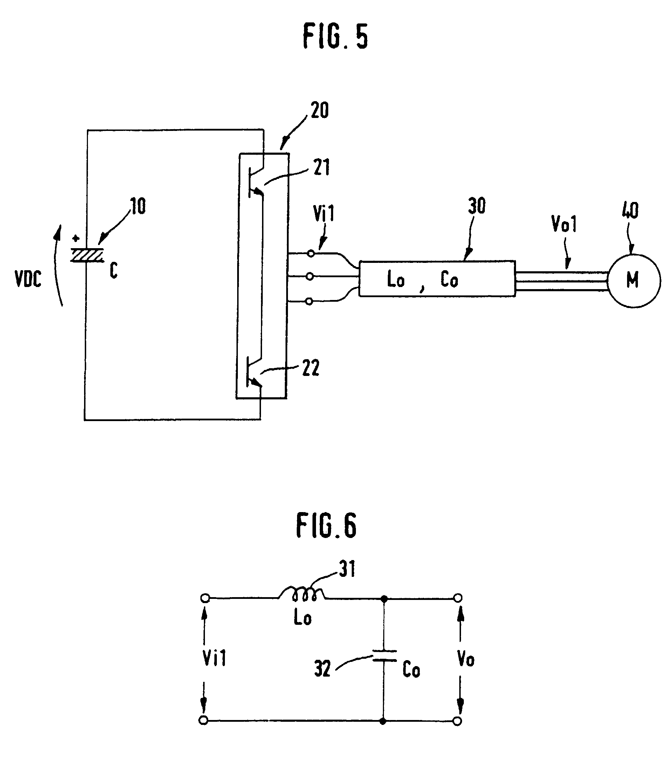

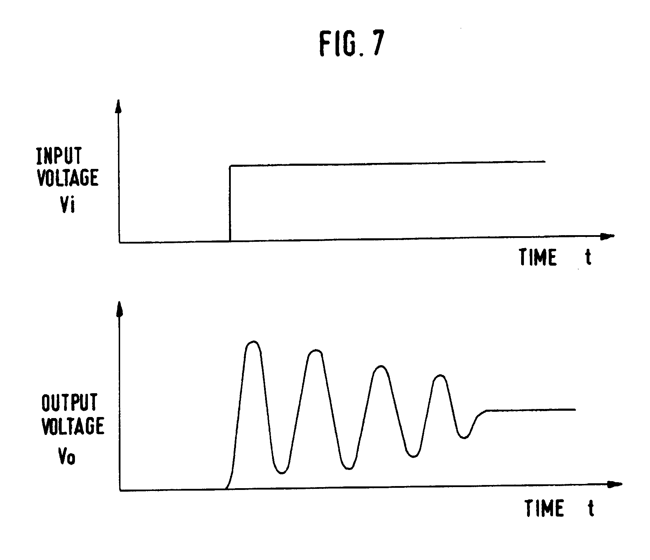

Figure 5 provides an example of a conventional inverter unit circuit, wherein an electrolytic capacitor 10 operates as a DC power supply connected to a motor 40 by a cable 30. An inverter circuit 20 converts a supplied DC voltage to a square-wave AC voltage for output to the motor 40 which is the load. The inverter unit is constituted by the DC power supply 10 and the inverter circuit 20. In practice, the inverter unit 20 could be equipped with a converter circuit (not illustrated) for converting the AC voltage of a commercial power supply provided by an AC power supply and outputting a DC voltage. The DC voltage could be smoothed by the electrolytic capacitor 10 and supplied to the inverter circuit 20. The converter circuit and capacitor 10 would constitute the DC power supply.

In operation, the DC voltage supplied by the electrolytic capacitor 10 is converted by switching transistors 21, 22 into a square-wave AC voltage, which then is transmitted to the motor 40 via the cable 30 to control the rotation of the motor 40.

In common practice, however, the cable 30 connecting the inverter circuit 20 and the motor 40 may be rather long. In such a case, the inductance $L_0$ and capacitance $C_0$ of the cable 30 cannot be considered negligible.

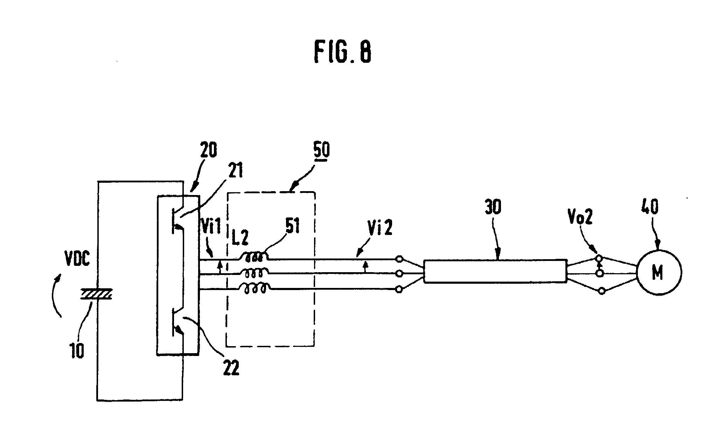

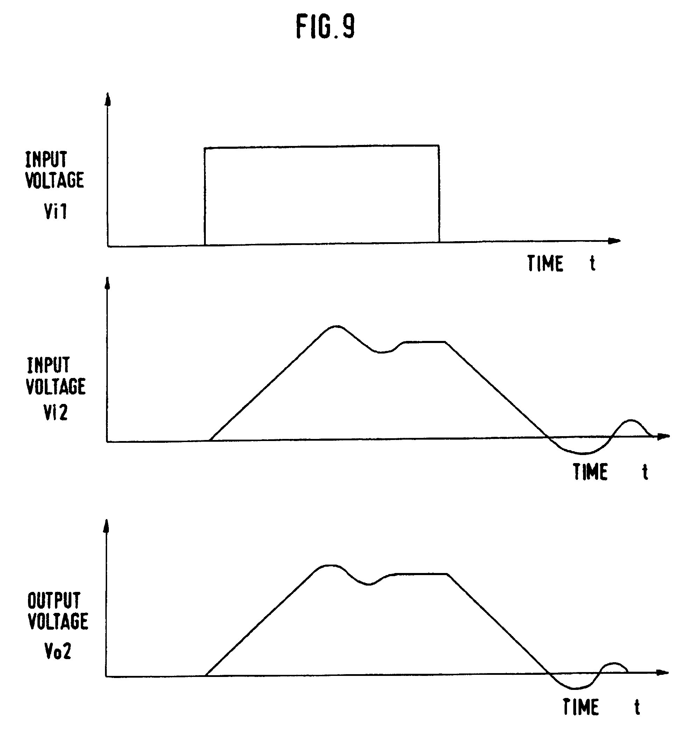

Figure 6 shows an equivalent circuit of the cable 30, and Figure 7 illustrates the waveforms of the input voltage Vi and output voltage Vo (terminal voltage to the motor 40) of the cable 30.

By entering the step voltage Vi as shown in Figure 7 into the input port of the equivalent circuit shown in Figure 6, the terminal voltage Vo of the motor 40 oscillates as shown in Figure 7. This oscillating voltage can become twice the input voltage (output voltage of the inverter circuit 20) of the cable 30 in the worst case, causing a premature deterioration of the insulation of the motor 40.

In general, when a step-shaped DC voltage $\underline{E}$ is applied at a time t = 0 to a circuit where an inductance $\underline{L}$ and a capacitance $\underline{C}$ are connected in series, a relationship between a voltage Eout generated at the capacitance $\underline{C}$ and elapsed time $\underline{t}$ is expressed as follows:

$$Eout = E(1 - \cos \frac{1}{\sqrt{LC}} t) \qquad (1).$$

Hence, if

$$\cos \frac{1}{\sqrt{LC}} t = -1$$

in expression (1), Eout is maximum; Eout = 2E, i.e. the output voltage reaches twice the input voltage.

Recently, low-noise inverters have been put on the market which have been enhanced in carrier frequency from the previous 1-2kHz to 10kHz or higher by employing power MOSFETs and IGBTs as power elements that are higher in switching speed than the transistors 21, 22 of the inverter circuit 20. Because of their large ratios of voltage change, however, such high-speed switching elements are liable to increase the crest value of the oscillating voltage of terminal voltage Vo of the motor 40.

In addition, if the carrier frequency is increased 10 or more times, the number of times that the oscillating voltage is applied to the motor 40 naturally increases, causing further deterioration of the motor 40.

In order to suppress the oscillating voltage, some conventional circuits have employed reactors 51 of sufficiently large inductance L2 inserted as oscillation suppression means 50, as shown in Figure 8, between each output end of the inverter circuit 20 and each input end of the cable 30. $Vi_1$, $Vi_2$, and $Vo_2$ in Figure 9 illustrate the stepwise input voltage Vi and output voltage $Vi_2$ (input voltage of the cable 30) of the inductance $L_2$, and the motor terminal voltage $Vo_2$ (output voltage of the cable 30). As shown in Figure 9, the reactors 51 smooth the leading and trailing edges of the fast-rising voltage $Vi_1$ as indicated by the voltage $Vi_2$, to suppress the oscillation in the cable 30.

In the configuration as described above, the known inverter unit is disadvantageous in that an increase in cable length will cause a large oscillating voltage to be applied to the motor end, thus deteriorating the insulation of the motor. To prevent this, reactors may be inserted between the cable and the inverter circuit output end. In this case, reactors having a relatively large inductance are required to make the leading edge of the voltage smooth enough to provide an oscillation suppressing effect, but the reactors will adversely affect motor control performance due to their voltage drop. In addition, relatively large-sized reactors are required because of their large inductances posing problems of increased size and cost.

Accordingly, it is an object of the present invention to overcome the disadvantages in the prior art and to provide an improved circuit for suppressing a resonance voltage in a cable for supplying an AC output from an inverter to a load.

This object is solved by a circuit for reducing a resonance voltage generated by the inductance and the capacitance of a long cable with respect to the claim.

In the circuit according to the invention, the series structure comprises a capacitor coupled between the pair of diodes and the DC power supply. Such a capacitor is inserted for absorbing the first wave of a resonance voltage. In such a manner, the rise of a voltage supplied to the load is suppressed.

The invention will be explained in more detail with reference to the accompanying drawings.

BRIEF DESCRIPTION OF THE DRAWINGS

Figure 1 is a circuit diagram illustrating an inverter unit, a cable, a motor and a voltage clamping circuit.

Figure 2 is an equivalent circuit diagram of the inverter unit and cable portions shown in Figure 1.

Figure 3 illustrates the voltage waveform of each portion versus time elapsed in the equivalent circuit shown in Figure 2.

Figure 4 shows an inverter unit according to the invention.

Figure 5 is the circuit diagram of a conventional inverter unit.

Figure 6 is the equivalent circuit of a cable.

Figure 7 illustrates input and output voltage waveforms versus time elapsed in the cable shown in Figure 6.

Figure 8 is the circuit diagram of another conventional inverter unit.

Figure 9 illustrates the voltage waveform of each portion versus time elapsed in the circuit diagram shown in Figure 8.

DETAILED DESCRIPTION OF THE PREFERRED EMBODIMENTS

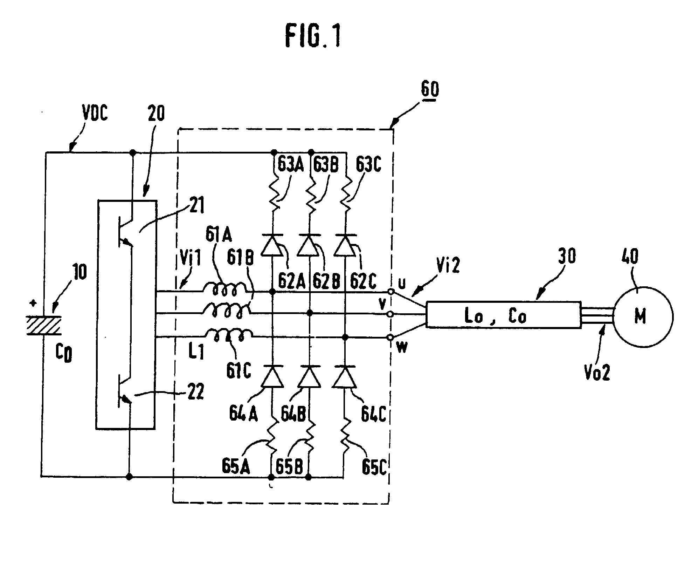

One embodiment with clamping circuit will now be described in reference to Figures 1 to 3. In the drawings, the same reference characters designate the same or corresponding parts throughout the different views.

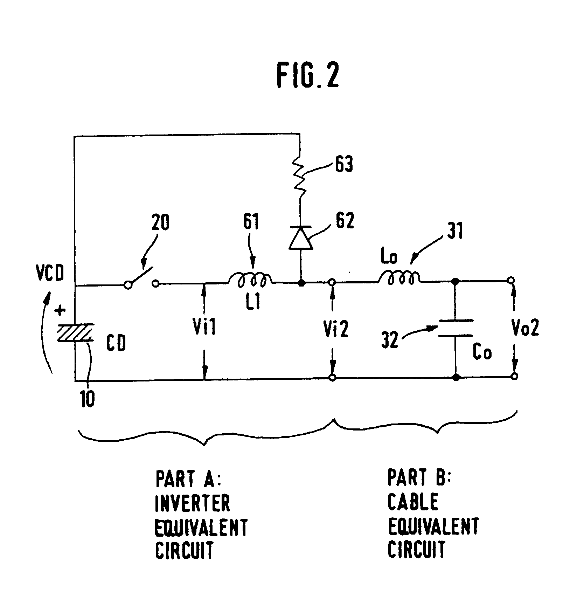

Figure 1 is a wiring diagram of the inverter unit and Figure 2 is an equivalent circuit diagram of the unit shown in Figure 1. Referring to Figures 1 and 2, a voltage clamping circuit 60 comprising reactors 61A-61C is shown inserted between the inverter circuit 20 and the cable 30. A first set of series circuits consisting of diodes 62A-62C and resistors 63A-63C are shown with diodes 62A-62C connected to the output of the reactors 61A-61C and the cable 30. A second set of series circuits consisting of diodes 64A-64C and resistors 65A-65C are similarly connected to the outputs of reactors 61A-61C, with the diodes 64A-64C serving as the connecting points. The resistors of the first and second sets of series circuits are respectively connected with the positive and negative poles of the DC power supply in the form of an electrolytic capacitor 10. Individual circuits of the first set of series circuits consisting of the diodes 62A-62C and resistors 63A-63C and individual circuits of the second set of series circuits constituting the diodes 64A-64C and resistors 65A-65C constitute a pair of clamping series structures for clamping the resonance voltage of the reactors 61A-61C and the cable 30.

The inductances $L_1$ of the reactors 61A-61C should be selected to be sufficiently large compared to the wiring inductance $L_o$ of the cable 30.

Figure 2 shows an equivalent circuit of the circuit portion made up of the electrolytic capacitor 10, inverter circuit 20, voltage clamping circuit 60, and cable 30 as shown in Figure 1. Since the inductances have been selected to satisfy $L_1 >> L_0$ as described above, the cable 30 input voltage (output voltage of the reactors 61) $Vi_2$ and output voltage (motor input voltage) $Vo_2$ are approximately equal, i.e. $Vi_2 \approx Vo_2$. By turning on a switch in the equivalent circuit of the inverter circuit 20, the resonance voltage $Vi_2$ ($\approx Vo_2$) is generated by the induct-

ances $L_1$ of the reactors 61 and the capacitance $C_0$ of the cable 30. However, the input ends of the cable 30, i.e. the output ends of the reactors 61A-61C, are connected to the electrolytic capacitor 10 via the clamping series structures comprising the diodes 62A-62C and resistors 63A-63C. Hence, when the oscillating voltage $V_I$ rises above the terminal voltage $V_{DC}$ of the electrolytic capacitor 10, the diodes 62A-62C are switched on, clamping $Vi_2$ to $V_{DC}$.

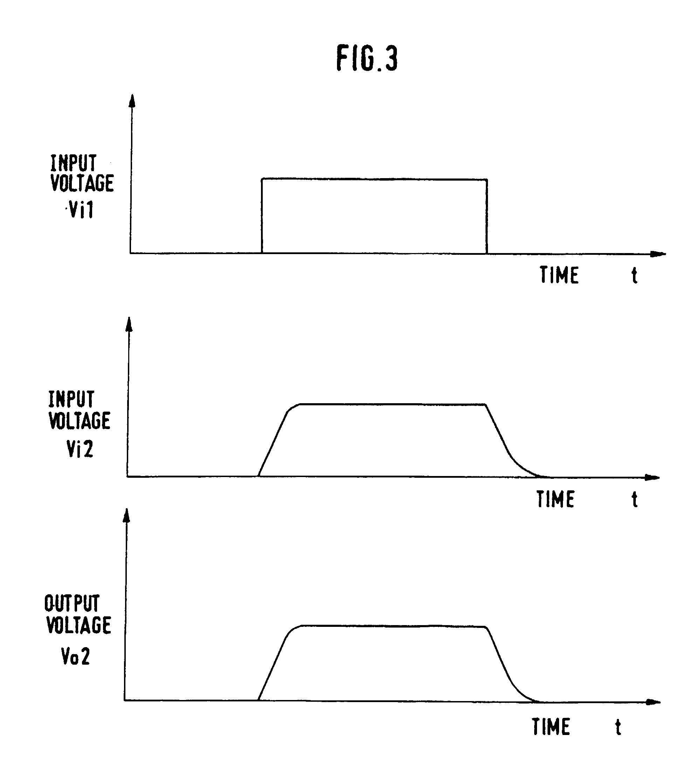

Figure 3 illustrates relationships between the output voltage $Vi_1$ of the inverter circuit 20, the output voltage $Vi_2$ of the reactors 61A-61C, the output voltage (motor input voltage) $Vo_2$ of the cable 30, and elapsed time $\underline{t}$. Here $Vi_2 \approx Vo_2$ and, as a result, a larger voltage than $V_{DC}$ is not applied as the motor input voltage $Vo_2$.

In Figure 2, the impedance of the motor 40 is not indicated because it is sufficiently larger than that of the cable 30 and will not be needed to understand the circuit operation.

Since the resistors 63A-63C, 65A-65C limit the current flowing in the diodes at the time of voltage clamping in Figure 1, those of appropriate resistance values should be selected in accordance with the current resistance of the diodes 62A-62C, 64A-64C.

In Figure 1, a similar effect may be produced when additional reactors (not illustrated) are inserted instead of the resistors 63A-63C, 65A-65C to constitute the clamping series structures together with the diodes 62A-62C, 64A-64C. A similar effect may also be produced by inserting varistors instead of diodes 62A-62C, 64A-64C.

Moreover, when the current resistance of the diodes 62A-62C, 64A-64C is sufficiently large, the resistors 63A-63C, 65A-65C and the second reactors (not illustrated) need not be inserted at all.

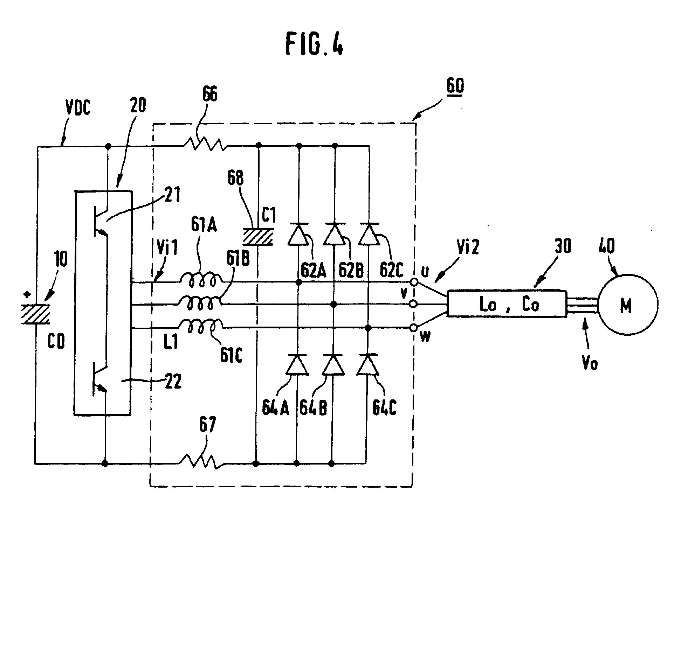

Figure 4 provides an example of an inverter unit circuit according to the invention. This unit is similar to that shown in Figure 1 but adds resistors 66, 67 and a capacitor 68. In the first embodiment shown in Figure 1, a large value $R_1$ must be selected for the resistors 63A-63C, 65A-65C, leading to a potential reduction in voltage effect. In the circuit configuration in Figure 4, the capacitor 68 of capacitance $C_1$ smaller than the capacitance $C_0$ of the cable 30 is inserted and connected in parallel to the pairs of diodes 62A-62C, 64A-64C to cause the first wave having the largest oscillation to be clamped by the capacitor 68 and the following waves to be absorbed by the electrolytic capacitor 10 via the resistors 66, 67. This circuit allows the use of diodes which are relatively small in surge resistance and current resistance.

Unlike the circuit shown in Figure 1, the circuit illustrated in Figure 4 causes surges from the diodes 62A-62C, 64A-64C to be clamped by the capacitor 68 without passing through the resistors 66, 67 so that external noise coming from the cable 30 may be absorbed. Further, the circuit is advantageous in that little heat is generated by the resistors 66, 67.

In Figure 4, a similar effect may be produced when reactors (not illustrated) are inserted instead of the resistors 63A-63C, 65A-65C to constitute the clamping series structures together with the diodes 62A-62C, 64A-64C. A similar effect may also be produced by inserting varistors instead of diodes 62A-62C, 64A-64C.

It will be apparent that the invention, as described above, achieves a relatively compact and low-cost inverter unit which suppresses the rise of the voltage supplied to the load due to any voltage resonance in the cable.

## Claims

1. A circuit for reducing resonance voltage generated by the inductance and capacitance of a long cable (30) connecting the output of a voltage source (10) and a load (40), the circuit comprising:

   - inverter means (20) for switching and converting a DC voltage supplied by a DC power supply (10) into an AC voltage, and supplying the AC voltage to the load (40) through the cable (30); and

   - voltage clamping means (60), coupled to the inverter means (20), for suppressing the resonance voltage in the long cable (30), said voltage clamping means (60) comprising reactors (61A - 61C) connected in series between the inverter means (20) and the cable (30),

     wherein the inductances $L_1$ of the reactors (61A - 61C) are selected to be much greater than ($L_1$ >> $L_0$) the inductance $L_0$ of the cable (30);

     wherein the voltage clamping means (60) clamps a crest of the resonance voltage to approximately a value of a voltage supplied by the DC power supply (10),

     wherein the voltage clamping means (60) further comprises a series structure having pairs of diodes (62A, 64A ; 62B, 64B; 62C, 64C) being connected between the inverter means (20) and the DC power supply (10), and

     wherein a capacitor (68) having a capacitance ($C_1$) smaller than the capacitance ($C_0$) of the long cable (30) is arranged parallel to the pairs of diodes (62a, 64a; 62b, 64b; 62c, 64c) for absorbing the first harmonic wave of the resonance voltage and noise coming from the long cable (30).

**Patentansprüche**

1. Schaltung zum Reduzieren einer Resonanzspannung, die von der Induktivität und Kapazität eines langen Kabels (30) erzeugt wird, das den Ausgang einer Stromquelle (10) und einer Last (40) verbindet, wobei die Schaltung folgendes aufweist:

   - eine Wechselrichtereinrichtung (20), um eine von einer Gleichstromversorgung (10) gelieferte Gleichspannung zu schalten und in eine Wechselspannung umzuwandeln und um die Wechselspannung durch das Kabel (30) der Last zuzuführen; und
   - eine mit der Wechselrichtereinrichtung (20) gekoppelte Spannungsklemmeinrichtung (60) zum Unterdrücken der Resonanzspannung in dem langen Kabel (30), wobei die Spannungsklemmeinrichtung (60) Drosseln (61A bis 61C) aufweist, die zwischen die Wechselrichtereinrichtung (20) und das Kabel (30) in Reihe geschaltet sind;

      wobei die Induktivitäten (L1) der Drosseln (61A bis 61C) viel größer gewählt sind als die Induktivität (Lo) des Kabels (30) (L1 >> Lo);
      wobei die Spannungsklemmeinrichtung (60) einen Scheitelwert der Resonanzspannung etwa auf dem Wert einer von der Gleichstromversorgung (10) gelieferten Spannung festhält;
      wobei die Spannungsklemmeinrichtung (60) ferner eine Reihenschaltungsanordnung mit Diodenpaaren (62A, 64A; 62B, 64B; 62C, 64C) aufweist, die zwischen die Wechselrichtereinrichtung (20) und die Gleichstromversorgung (10) geschaltet sind; und
      wobei ein Kondensator (68) mit einer Kapazität (C1), die kleiner ist als die Kapazität (Co) des langen Kabels (30), parallel zu den Diodenpaaren (62A, 64A; 62B, 64B; 62C, 64C) geschaltet ist, um die erste Oberwelle der Resonanzspannung und vom langen Kabel (30) stammendes Rauschen zu absorbieren.

**Revendications**

1. Circuit pour la réduction de la tension de résonance produite par l'inductance et la capacité d'un câble (30) de grande longueur qui relie la sortie d'une source de courant (10) et une charge (40), le circuit comprenant:

   - des moyens d'inversion (20) pour commuter et pour convertir un courant continu fourni par une source de puissance à courant continu (10) en un courant alternatif, et pour fournir le courant alternatif à la charge (40) via le câble (30); et

   - des moyens de verrouillage de tension (60), accouplés aux moyens d'inversion (20), afin de supprimer la tension de résonance dans le câble de grande longueur (30), lesdits moyens (60) de verrouillage de tension comprenant des réactances (61A à 61C) connectées en série entre les moyens d'inversion (20) et le câble (30);

      dans lequel les inductances (L1) des réactances (61A à 61C) sont choisies de manière à être beaucoup plus importantes que l'inductance (Lo) du câble (30) (L1 >> Lo);
      dans lequel les moyens de verrouillage de tension (60) verrouillent une pointe de tension de résonance approximativement à une valeur d'une tension fournie par la source de puissance à courant continu (10);
      dans lequel les moyens de verrouillage de tension (60) comprennent en outre une structure en série qui comprend des paires de diodes (62A, 64A; 62B, 64B; 62C, 64), branchées entre les moyens d'inversion (20) et la source de puissance à courant continu (10); et
      dans lequel un condensateur (68), avec une capacité (C1) inférieure à la capacité (Co) du câble de grande longueur (30), est branché en parallèle aux paires de diodes (62A, 64A; 62B, 64B; 62C, 64C), afin d'absorber la première onde harmonique de la tension de résonance et les bruits provenant du câble de grande longueur (30).

# FIG.1

# FIG.2

PART A:
INVERTER
EQUIVALENT
CIRCUIT

PART B:
CABLE
EQUIVALENT
CIRCUIT

# FIG.3

# FIG.4

# FIG. 5

# FIG.6

# FIG. 7

INPUT
VOLTAGE
Vi

TIME    t

OUTPUT
VOLTAGE
Vo

TIME    t

# FIG. 8

# FIG.9